# EUROPEAN PATENT APPLICATION

(11) **EP 4 760 877 A1**
(43) Date of publication of application: **17.06.2026**
(21) Application number: 25861713.3
(22) Date of filing: 29.08.2025
(51) Int. Cl.: H01M 10/653, H01M 10/617, H01M 10/6556, H01M 50/242, H01M 10/6567, H01M 50/502, H01M 50/256

(54) **BATTERY DEVICE**

(30) Priority: 09.09.2024 KR 20240122122
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR)
(74) Representative: Plasseraud IP
(86) International application number: PCT/KR2025/013278
(87) International publication number: WO 2026/054424

(57) **Abstract**

The technical concept of the present disclosure provides a battery device including: a housing; a cell assembly provided within the housing and including a plurality of battery cells; a first thermally conductive adhesive layer configured to attach a first region of the cell assembly to the housing; and a second thermally conductive adhesive layer configured to attach a second region of the cell assembly to the housing, wherein the thermal conductivity of the first thermally conductive adhesive layer is greater than the thermal conductivity of the second thermally conductive adhesive layer, wherein the adhesive strength of the first thermally conductive adhesive layer is less than the adhesive strength of the second thermally conductive adhesive layer.

## Description

### [Technical Field]

The present disclosure relates to a battery device. This application claims the benefit of Korean Patent Application No. 10-2024-0122122, filed on September 9, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

As secondary batteries are used in mobility applications, the demand for their safety has increased. If accidents such as fires occur in secondary batteries used in mobility, they can endanger the life of the driver. Therefore, research on technologies to enhance the safety of secondary batteries is indispensable.

### [Summary]

### [Technical Problem]

The technical problem addressed by the technical concept of the present disclosure is to provide a battery device.

### [Technical Solution]

To solve the aforementioned problem, the technical concept of the present disclosure provides a battery device including: a housing; a cell assembly provided within the housing and including a plurality of battery cells; a first thermally conductive adhesive layer configured to attach a first region of the cell assembly to the housing; and a second thermally conductive adhesive layer configured to attach a second region of the cell assembly to the housing, wherein the thermal conductivity of the first thermally conductive adhesive layer is greater than the thermal conductivity of the second thermally conductive adhesive layer, wherein the adhesive strength of the first thermally conductive adhesive layer is less than the adhesive strength of the second thermally conductive adhesive layer.

In exemplary embodiments, the plurality of battery cells each includes a first portion relatively adjacent to an electrode lead and a second portion relatively distant from the electrode lead, wherein the first thermally conductive adhesive layer contacts the first portion of each of the plurality of battery cells, wherein the second thermally conductive adhesive layer contacts the second portion of each of the plurality of battery cells.

In exemplary embodiments, the cell assembly further includes a busbar frame supporting the electrode leads of the plurality of battery cells.

In exemplary embodiments, the battery device further includes: a third thermally conductive adhesive layer configured to attach a third region of the cell assembly, located between the first region and the second region of the cell assembly, to the housing, wherein the thermal conductivity of the third thermally conductive adhesive layer is between the thermal conductivity of the first thermally conductive adhesive layer and the thermal conductivity of the second thermally conductive adhesive layer, wherein the adhesive strength of the third thermally conductive adhesive layer is between the adhesive strength of the first thermally conductive adhesive layer and the adhesive strength of the second thermally conductive adhesive layer.

In exemplary embodiments, the plurality of battery cells each includes a first peripheral part, a second peripheral part, and a central part between the first peripheral part and the second peripheral part, wherein the first thermally conductive adhesive layer contacts the first peripheral part and the second peripheral part of each of the plurality of battery cells, wherein the second thermally conductive adhesive layer is in contact with the central part of each of the plurality of battery cells.

In exemplary embodiments, the battery device further includes a separation pad disposed between the first thermally conductive adhesive layer and the second thermally conductive adhesive layer.

In exemplary embodiments, the separation pad is in contact with the plurality of battery cells.

In exemplary embodiments, the housing includes: a base frame supporting the cell assembly and including a cooling channel configured to allow a cooling fluid to flow; and a side frame disposed on the base frame, wherein the first thermally conductive adhesive layer and the second thermally conductive adhesive layer are provided between the cell assembly and the base frame.

In exemplary embodiments, the battery device further includes a separation pad attached to the base frame and in contact with the plurality of battery cells, wherein the first thermally conductive adhesive layer is spaced apart from the second thermally conductive adhesive layer with the separation pad in between.

In exemplary embodiments, the housing includes: a base frame supporting the cell assembly; and a side cooling frame disposed between two adjacent battery cells among the plurality of battery cells, wherein the first thermally conductive adhesive layer and the second thermally conductive adhesive layer are in contact with at least one of the plurality of battery cells and the side cooling frame.

In exemplary embodiments, the side cooling frame includes a cooling channel configured to allow a cooling fluid to flow.

In exemplary embodiments, the battery device further includes a separation pad attached to the side cooling frame, wherein the first thermally conductive adhesive layer is spaced apart from the second thermally conductive adhesive layer with the separation pad in between.

In exemplary embodiments, the housing further includes: a base frame supporting the cell assembly and attached to the first thermally conductive adhesive layer and the second thermally conductive adhesive layer; a side cooling frame disposed between two adjacent battery cells among the plurality of battery cells; a first side thermally conductive adhesive layer configured to attach a first region of a corresponding battery cell among the plurality of battery cells to the cooling frame; and a second side thermally conductive adhesive layer configured to attach a second region of a corresponding battery cell among the plurality of battery cells to the cooling frame, wherein the thermal conductivity of the first side thermally conductive adhesive layer is greater than the thermal conductivity of the second side thermally conductive adhesive layer.

In exemplary embodiments, the adhesive strength of the first side thermally conductive adhesive layer is smaller than the second adhesive strength of the second side thermally conductive adhesive layer.

In exemplary embodiments, the cell assembly further includes: a pair of side beams spaced apart with the plurality of battery cells therebetween; and a lifting band fastened to the pair of side beams and extending along the bottom surfaces of the plurality of battery cells, wherein the lifting band is disposed between the second thermally conductive adhesive layer and the plurality of battery cells.

### [Advantageous Effects]

According to the battery device according to exemplary embodiments, portions of individual battery cells where relatively large amounts of heat are generated can be attached to the housing with a thermally conductive adhesive layer having relatively high thermal conductivity, and portions of individual battery cells that are relatively vulnerable to vibration can be attached to the housing with a thermally conductive adhesive layer having relatively high adhesive strength. Therefore, compared to the case of attaching battery cells to the housing with a single thermally conductive adhesive layer, temperature uniformity of the battery cells can be improved and structural safety of the battery cells can be enhanced.

The effects that can be obtained from the exemplary embodiments of the present disclosure are not limited to the effects mentioned above, and other effects not mentioned can be clearly derived and understood from the following description by one having ordinary knowledge in the technical field to which the exemplary embodiments of the present disclosure belong. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is an exploded perspective view showing a battery device according to exemplary embodiments.
FIG. 2 is a plan view showing a portion of a battery device according to exemplary embodiments.
FIG. 3 is a cross-sectional view showing a portion of a battery device according to exemplary embodiments.
FIG. 4 is a cross-sectional view showing a portion of a battery device according to exemplary embodiments.
FIG. 5 is a cross-sectional view showing a portion of a battery device according to exemplary embodiments.
FIG. 6 is a plan view showing a portion of a battery device according to exemplary embodiments.
FIG. 7 is a cross-sectional view of the battery device taken along line VII-VII' of FIG. 6.
FIG. 8 is a cross-sectional view of the battery device taken along line VIII-VIII' of FIG. 6.
FIG. 9 is a cross-sectional view showing a portion of a battery device according to exemplary embodiments.
FIG. 10 is a cross-sectional view showing a portion of a battery device according to exemplary embodiments.
FIG. 11 is a cross-sectional view showing a portion of a battery device according to exemplary embodiments.
FIG. 12 is a cross-sectional view showing a portion of a battery device according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

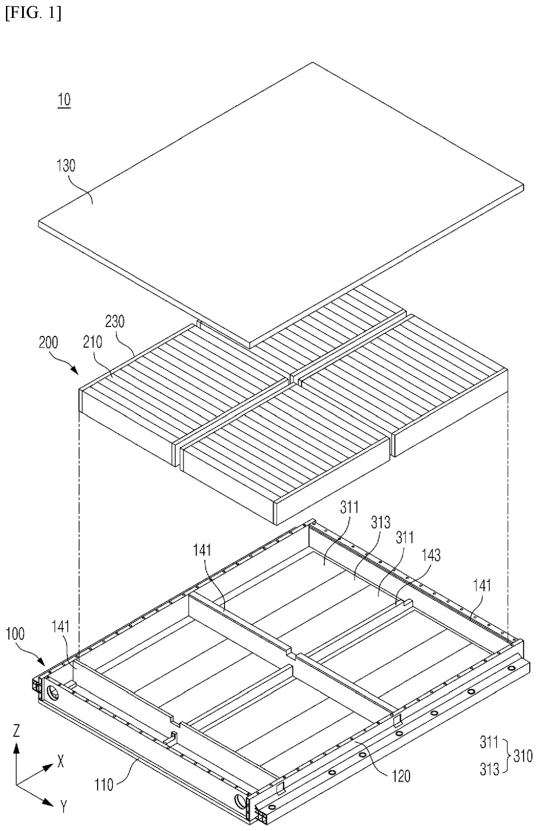

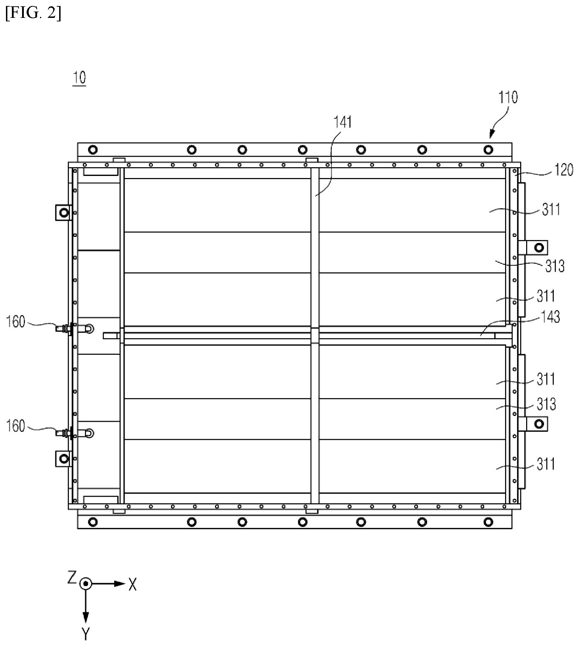

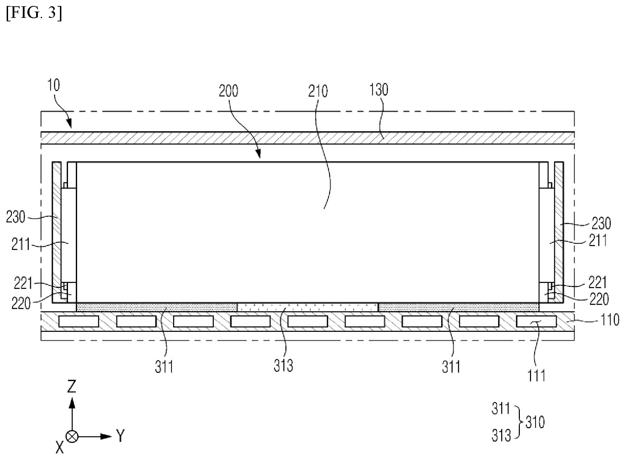

FIG. 1 is an exploded perspective view showing a battery device 10 according to exemplary embodiments. FIG. 2 is a plan view showing a portion of the battery device 10 according to exemplary embodiments. FIG. 3 is a cross-sectional view showing a portion of the battery device 10 according to exemplary embodiments.

Referring to FIGS. 1 through 3, the battery device 10 may include a housing 100, a plurality of cell assemblies 200, and a base thermally conductive adhesive layer 310.

The housing 100 may have an internal space for accommodating the plurality of cell assemblies 200. The housing 100 may include a base frame 110, a side frame 120, a top frame 130, a first separation frame 141, and a second separation frame 143.

The base frame 110 may support the plurality of cell assemblies 200. The base frame 110 may have a plate-like form extending in a first horizontal direction (e.g., X-axis direction) and a second horizontal direction (e.g., Y-axis direction).

The base frame 110 may include a base cooling channel 111 configured to allow a cooling fluid to flow. In exemplary embodiments, the base cooling channel 111 may extend within the base frame 110 in a first horizontal direction (e.g., X-axis direction) and may be configured to guide the cooling fluid in the first horizontal direction (e.g., X-axis direction). Pipes 160 configured to convey the cooling fluid may be coupled to the base frame 110. Cooling fluid supplied from an external source may sequentially flow along one of the pipes 160, the base cooling channel 111, and another one of the pipes 160. While the cooling fluid flows through the base cooling channel 111, cooling of the plurality of cell assemblies 200 may occur. The cooling fluid may include coolant and/or refrigerant.

The side frame 120 may be coupled to the base frame 110. The side frame 120 may be coupled around the perimeter of the base frame 110 and may extend along the perimeter of the base frame 110. The side frame 120 may extend continuously along the perimeter of the base frame 110 to enclose a plurality of cell assemblies 200. When viewed in plan, the side frame 120 may have a generally rectangular ring shape.

The top frame 130 may be coupled to the side frame 120 and may cover the plurality of cell assemblies 200. The top frame 130 may have a plate-like form extending in a first horizontal direction (e.g., the X-axis direction) and a second horizontal direction (e.g., the Y-axis direction).

The first separation frame 141 and the second separation frame 143 may be provided on the base frame 110. The first separation frame 141 and the second separation frame 143 may partition or separate the internal space of the housing 100 into a plurality of subspaces. A respective cell assembly 200 may be disposed within each of the plurality of subspaces of the housing 100 defined by the first separation frame 141 and the second separation frame 143. The first separation frame 141 and the second separation frame 143 may extend in mutually intersecting directions. The first separation frame 141 may extend in a second horizontal direction (e.g., the Y-axis direction), and the second separation frame 143 may extend in a first horizontal direction (e.g., the X-axis direction).

A plurality of cell assemblies 200 may be mounted on the base frame 110. The plurality of cell assemblies 200 may be arranged on the base frame 110 in a first horizontal direction (e.g., X-axis direction) and/or a second horizontal direction (e.g., Y-axis direction). Each cell assembly 200 may correspond to a battery module or a cell-to-pack unit.

Each cell assembly 200 may include a plurality of battery cells 210, a plurality of busbar frames 220, and a plurality of end frames 230.

Each battery cell 210 is a lithium-ion battery, i.e., the basic unit of a secondary battery. Each battery cell 210 may include an electrode assembly, an electrolyte, and a cell case. The electrode assembly incorporated within the cell case may include a positive electrode, a negative electrode, and a separator interposed between the positive electrode and negative electrode. The electrode assembly may be either a jelly-roll type or a stack-type, depending on its assembly form. A jelly-roll type electrode assembly may include a wound structure of a positive electrode, a negative electrode, and a separator interposed between them. A stack-type electrode assembly may include a plurality of positive electrodes, a plurality of negative electrodes, and a plurality of separators interposed between them, stacked sequentially. The positive electrode may include a positive electrode current collector and a positive electrode active material. The negative electrode may include a negative electrode current collector and a negative electrode active material.

Each battery cell 210 may correspond to a pouch-type battery cell, a cylindrical battery cell, or a prismatic battery cell. The electrode assembly of a pouch-type battery cell is provided within a pouch case including an aluminum laminate sheet. The electrode assembly of a cylindrical battery cell is provided within a cylindrical metal can. The electrode assembly of a prismatic battery cell is provided within a prismatic metal can.

A plurality of battery cells 210 provided within each cell assembly 200 may be connected in series and/or parallel. For example, a plurality of battery cells 210 may be connected in series with each other. For example, a plurality of battery cells 210 may also be connected in parallel with each other. For example, when defining a set of two or more battery cells 210 connected in parallel as a bank, one bank composed of two or more battery cells 210 connected in parallel and another bank composed of two or more battery cells 210 connected in parallel may be connected in series.

In exemplary embodiments, a plurality of battery cells 210 may be arranged in a first horizontal direction (e.g., X-axis direction), and each battery cell 210 may extend in a second horizontal direction (e.g., Y-axis direction). An electrode lead 211 may be provided on at least one of the two ends of each battery cell 210 along the second horizontal direction (e.g., the Y-axis direction). The electrode leads 211 of adjacent battery cells 210 among the plurality of battery cells 210 may be electrically and physically connected to each other.

A plurality of busbar frames 220 may each support the electrode leads 211 of a plurality of battery cells 210. Each busbar frame 220 may include a plurality of slits into which the electrode leads 211 of the plurality of battery cells 210 are inserted. One of the plurality of busbar frames 220 may support electrode leads 211 provided on one side of the plurality of battery cells 210, and another of the plurality of busbar frames 220 may support electrode leads 211 provided on the other side of the plurality of battery cells 210.

Each busbar frame 220 may support a plurality of busbars 221. The plurality of busbars 221 may each be electrically and physically connected to at least one of the electrode leads 211 of the plurality of battery cells 210. The plurality of busbars 221 may include inter-busbars for electrically connecting different battery cells 210 within the cell assembly 200 and terminal busbars for electrically connecting *the* battery cells 210 of the cell assembly 200 to the battery cells 210 of another cell assembly 200.

A plurality of end frames 230 may each be coupled to a respective one of the plurality of busbar frames 220. Each end frame 230 may cover the busbars 221 mounted on the corresponding busbar frame 220.

A base thermally conductive adhesive layer 310 may be disposed between each of the plurality of cell assemblies 200 and the base frame 110, attaching each of the plurality of cell assemblies 200 to the base frame 110. The base thermally conductive adhesive layer 310 may be in direct contact with the plurality of battery cells 210 of the cell assembly 200 and may attach the plurality of battery cells 210 of the cell assembly 200 to the base frame 110. The plurality of battery cells 210 of the cell assembly 200 can be thermally and physically coupled to the base frame 110 via the base thermally conductive adhesive layer 310. Heat generated by the plurality of battery cells 210 of the cell assembly 200 can be transferred to the base frame 110 through the base thermally conductive adhesive layer 310. The base thermally conductive adhesive layer 310 may include a thermal resin and/or a thermal interface material (TIM).

The base thermally conductive adhesive layer 310 may include a plurality of thermally conductive adhesive layers having different material compositions, different thermal conductivities, and/or different adhesive strengths. The plurality of thermally conductive adhesive layers of the base thermally conductive adhesive layer 310 may be attached to different regions of the individual cell assemblies 200. The plurality of thermally conductive adhesive layers of the base thermally conductive adhesive layer 310 may include heat dissipation fillers, wherein the content of heat dissipation fillers in the plurality of thermally conductive adhesive layers of the base thermally conductive adhesive layer 310 may differ from one another. The heat dissipation filler may include, for example, alumina, boron nitride, aluminum nitride, zinc oxide, magnesium oxide, or combinations thereof.

In exemplary embodiments, the base thermally conductive adhesive layer 310 may include a first base thermally conductive adhesive layer 311 in contact with a first region of the cell assembly 200 and a second base thermally conductive adhesive layer 313 in contact with a second region of the cell assembly 200. The first base thermally conductive adhesive layer 311 may attach a first region of the cell assembly 200 to the base frame 110, and the second base thermally conductive adhesive layer 313 may attach a second region of the cell assembly 200 to the base frame 110. The first base thermally conductive adhesive layer 311 can attach portions of a plurality of battery cells 210 within the first region of the cell assembly 200 to the base frame 110, and the second base thermally conductive adhesive layer 313 can attach portions of a plurality of battery cells 210 within a second region of the cell assembly 200 to the base frame 110.

The first base thermally conductive adhesive layer 311 may have a first thermal conductivity and a first adhesive strength, and the second base thermally conductive adhesive layer 313 may have a second thermal conductivity and a second adhesive strength. The first thermal conductivity of the first base thermally conductive adhesive layer 311 may be greater than the second thermal conductivity of the second base thermally conductive adhesive layer 313. The first adhesive strength of the first base thermally conductive adhesive layer 311 may be less than the second adhesive strength of the second base thermally conductive adhesive layer 313. The first base thermally conductive adhesive layer 311, having relatively high thermal conductivity, may be attached to areas within the cell assembly 200 where relatively large amounts of heat are generated, thereby enhancing cooling of the cell assembly 200. The second base thermally conductive adhesive layer 313, having a relatively low thermal conductivity, may be attached to areas within the cell assembly 200 where relatively less heat is generated. By attaching the first base thermally conductive adhesive layer 311 to areas within the cell assembly 200 where relatively large amounts of heat are generated and attaching the second base thermally conductive adhesive layer 313 to areas within the cell assembly 200 where relatively small amounts of heat are generated, temperature variations within the cell assembly 200 can be reduced. The second base thermally conductive adhesive layer 313, which possesses relatively high adhesive strength, is attached to areas within the cell assembly 200 that are relatively vulnerable to vibration, thereby enhancing the structural safety of the cell assembly 200.

In exemplary embodiments, the first thermal conductivity of the first base thermally conductive adhesive layer 311 is between approximately 3 W/(m·K) and 10 W/(m·K), approximately 4 W/(m·K) to 9 W/(m·K), approximately 5 W/(m·K) to 8 W/(m·K), or approximately 6 W/(m·K) to 7 W/(m·K). In exemplary embodiments, the second thermal conductivity of the second base thermally conductive adhesive layer 313 may be between about 20% and about 80% of the first thermal conductivity of the first base thermally conductive adhesive layer 311, between about 30% and about 70%, or between about 40% and about 60%.

In exemplary embodiments, the second adhesive strength of the second base thermally conductive adhesive layer 313 may be between about 1 MPa and about 5 MPa, between about 1.5 MPa and about 4.5 MPa, between about 2 MPa and about 4 MPa, or between about 2.5 MPa and about 3.5 MPa. In exemplary embodiments, the first adhesive strength of the first base thermally conductive adhesive layer 311 may be between about 10% and about 90% of the second adhesive strength of the second base thermally conductive adhesive layer 313, between about 20% and about 80%, between about 30% and about 70%, or between about 40% and about 60%.

In exemplary embodiments, the plurality of battery cells 210 may each include a first portion relatively adjacent to an electrode lead 211 and a second portion relatively distant from the electrode lead 211. The first portions of the plurality of battery cells 210 may be within a first region of the cell assembly 200, and the second portions of the plurality of battery cells 210 may be within a second region of the cell assembly 200. The first base thermally conductive adhesive layer 311 may be in contact with the first portions of the plurality of battery cells 210, and the second base thermally conductive adhesive layer 313 may be in contact with the second portions of the plurality of battery cells 210. The first portion of the battery cell 210 relatively adjacent to the electrode lead 211 is a portion where relatively more heat is generated during operation of the battery cell 210, and the second portion of the battery cell 210 relatively distant from the electrode lead 211 is a portion where relatively less heat is generated during operation of the battery cell 210. A first base thermally conductive adhesive layer 311 having relatively high thermal conductivity is attached to the first portion of each of the plurality of battery cells 210, thereby enhancing cooling for the plurality of battery cells 210. A second base thermally conductive adhesive layer 313 having relatively low thermal conductivity may be attached to the second portion of each of the plurality battery cells 210. As the first base thermally conductive adhesive layer 311 is attached to a first portion of each of the plurality of battery cells 210 and the second base thermally conductive adhesive layer 313 is attached to a second portion of each of the plurality of battery cells 210, temperature variations within each of the plurality of battery cells 210 can be reduced. Within each battery cell 210, the first portion of the battery cell 210 is supported by the busbar frame 220 and the end frame 230, providing relatively high structural safety. The second portion of the battery cell 210 is relatively distant from the busbar frame 220 and the end frame 230, providing relatively low structural safety. A second base thermally conductive adhesive layer 313 with relatively high adhesion can attach each second portion of the plurality of battery cells 210 to the base frame 110, thereby enhancing the structural safety of the plurality of battery cells 210.

In exemplary embodiments, the plurality of battery cells 210 may each include a first peripheral part connected to an electrode lead 211, a second peripheral part connected to another electrode lead 211, and a central part between the first and second peripheral parts. The battery cell 210 may extend in a second horizontal direction (e.g., the Y-axis direction), and the central part of the battery cell 210 may be located in the second horizontal direction (e.g., the Y-axis direction) between the first peripheral part and the second peripheral part of the battery cell 210. The first peripheral part and the second peripheral part of each battery cell 210 may be within a first region of the cell assembly 200, and the central part of each battery cell 210 may be within a second region of the cell assembly 200.

The first base thermally conductive adhesive layer 311 may be in contact with the first peripheral part and the second peripheral part of each battery cell 210, and the second base thermally conductive adhesive layer 313 may be in contact with the central part of each battery cell 210. The first peripheral part and second peripheral part of the battery cell 210 are each relatively adjacent to the electrode leads 211 and are portions where relatively large amounts of heat are generated during operation of the battery cell 210. The central part of the battery cell 210 is relatively distant from the electrode leads 211 and is a portion where relatively little heat is generated during operation of the battery cell 210. A first base thermally conductive adhesive layer 311 having relatively high thermal conductivity is attached to the first peripheral part and second peripheral part of each of the plurality of battery cells 210, thereby enhancing cooling for the plurality of battery cells 210. A second base thermally conductive adhesive layer 313 having relatively low thermal conductivity may be attached to the central part of each of the plurality of battery cells 210. By attaching the first base thermally conductive adhesive layer 311 to the first peripheral part and second peripheral part of each of the plurality of battery cells 210 and attaching the second base thermally conductive adhesive layer 313 to the central part of each of the plurality of battery cells 210, temperature variations within each of the plurality of battery cells 210 can be reduced. By adjusting the dimensions of the central part of the battery cell 210 in contact with the second base thermally conductive adhesive layer 313, the temperature deviation between regions of the battery cell 210 can be controlled more effectively. For example, the length of the central part of the battery cell 210 contacting the second base thermally conductive adhesive layer 313 in the second horizontal direction (e.g., the Y-axis direction) may be between about 10% and about 70%, approximately 20% to approximately 60%, or approximately 30% to approximately 50% of the length of the battery cell 210 along the second horizontal direction (e.g., the Y-axis direction).

The first peripheral part and second peripheral part of the battery cell 210 are supported by the busbar frame 220 and the end frame 230, respectively, providing relatively high structural safety. The central part of the battery cell 210 is relatively distant from the busbar frame 220 and the end frame 230, providing relatively low structural safety. A second base thermally conductive adhesive layer 313 with relatively high adhesive strength attaches the respective central parts of the plurality of battery cells 210 to the base frame 110, thereby enhancing the structural safety of the plurality of battery cells 210.

According to the battery device 10 of the exemplary embodiments, areas within each battery cell 210 that generate relatively high heat can be attached to the housing 100 using a thermally conductive adhesive layer with relatively high thermal conductivity, while areas within each battery cell 210 that are relatively vulnerable to vibration can be attached to the housing 100 using a thermally conductive adhesive layer with relatively high adhesive strength. Therefore, compared to attaching the battery cells 210 to the housing 100 using a single thermally conductive adhesive layer, this approach improves the temperature uniformity of the battery cells 210 and enhances their structural safety.

### (Second embodiment)

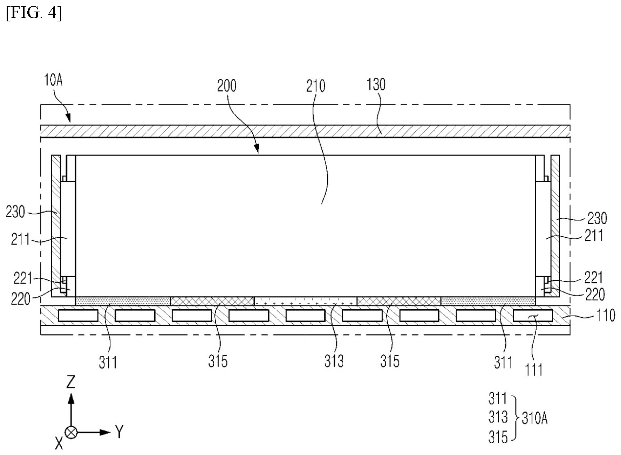

FIG. 4 is a cross-sectional view showing a portion of a battery device 10A according to exemplary embodiments. Herein, the battery device 10A shown in FIG. 4 is described with a focus on the differences from the battery device 10 described with reference to FIGS. 1 through 3.

Referring to FIG. 4, in the battery device 10A, the base thermally conductive adhesive layer 310A includes a first base thermally conductive adhesive layer 311 in contact with a first region of the cell assembly 200, a second base thermally conductive adhesive layer 313 in contact with a second region of the cell assembly 200, and a third base thermally conductive adhesive layer 315 in contact with a third region of the cell assembly 200. The third base thermally conductive adhesive layer 315 may attach portions of the battery cells 210 within the third region of the cell assembly 200 to the base frame 110. The third base thermally conductive adhesive layer 315 may be disposed between the first thermally conductive adhesive layer and the second thermally conductive adhesive layer.

The third base thermally conductive adhesive layer 315 may have a third thermal conductivity and a third adhesive strength. The third thermal conductivity of the third base thermally conductive adhesive layer 315 may be between the first thermal conductivity of the first base thermally conductive adhesive layer 311 and the second thermal conductivity of the second base thermally conductive adhesive layer 313. The third adhesive strength of the third base thermally conductive adhesive layer 315 may be between the first adhesive strength of the first base thermally conductive adhesive layer 311 and the second adhesive strength of the second base thermally conductive adhesive layer 313.

In exemplary embodiments, a plurality of battery cells 210 may each include a first peripheral part connected to an electrode lead 211, a second peripheral part connected to another electrode lead 211, a central part, a first intermediate part between the central part and the first peripheral part, and a second intermediate part between the central part and the second peripheral part. A first base thermally conductive adhesive layer 311 may be attached to the first peripheral part and the second peripheral part of each battery cell 210, a second base thermally conductive adhesive layer 313 may be attached to the central part of each battery cell 210, and the third base thermally conductive adhesive layer 315 may be attached to the first intermediate part and the second intermediate part of each battery cell 210.

### (Third embodiment)

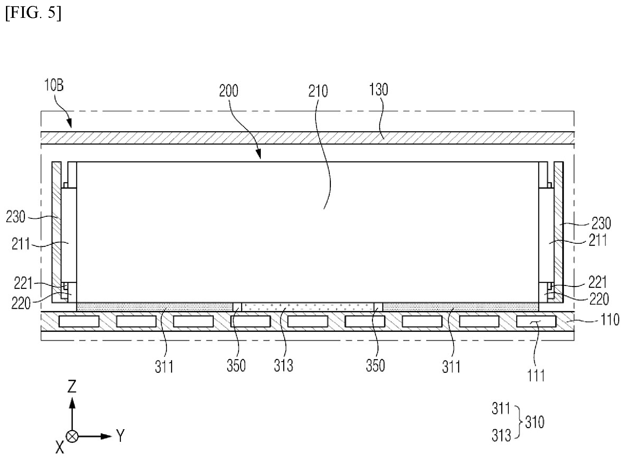

FIG. 5 is a cross-sectional view showing a portion of a battery device 10B according to exemplary embodiments. Hereinafter, the battery device 10B shown in FIG. 5 is described, focusing on the differences from the battery device 10 described with reference to FIGS. 1 to 3.

Referring to FIG. 5, the battery device 10B may further include a separation pad 350 disposed between a first base thermally conductive adhesive layer 311 and a second base thermally conductive adhesive layer 313. The separation pad 350 may be attached to the base frame 110. For example, the separation pad 350 may extend in a first horizontal direction (e.g., the X-axis direction), and the first base thermally conductive adhesive layer 311 and the second base thermally conductive adhesive layer 313 may be spaced apart in a second horizontal direction (e.g., the Y-axis direction) with the separation pad 350 interposed therebetween. The separation pad 350 is disposed between the first base thermally conductive adhesive layer 311 and the second base thermally conductive adhesive layer 313, thereby preventing or suppressing mixing between the first base thermally conductive adhesive layer 311 and the second base thermally conductive adhesive layer 313.

During the process of mounting the cell assembly 200 onto the housing 100, after applying the first base thermally conductive adhesive layer 311 and the second base thermally conductive adhesive layer 313 onto the base frame 110, the cell assembly 200 can be mounted onto the base frame 110. During the process of mounting the cell assembly 200 onto the base frame 110, the material forming the first base thermally conductive adhesive layer 311 and the material forming the second base thermally conductive adhesive layer 313 can be pressed against and spread over the cell assembly 200. At this time, the separation pad 350, disposed between the first base thermally conductive adhesive layer 311 and the second base thermally conductive adhesive layer 313, can prevent or suppress mixing between the material forming the first base thermally conductive adhesive layer 311 and the material forming the second base thermally conductive adhesive layer 313.

The separation pad 350 may include a material having a predetermined elasticity. When the cell assembly 200 is seated on the separation pad 350, the separation pad 350 is compressed, and the thickness of the separation pad 350 may decrease from its initial thickness. In exemplary embodiments, the separation pad 350 may include a polyurethane resin, a silicone resin, or a combination thereof.

### (Fourth embodiment)

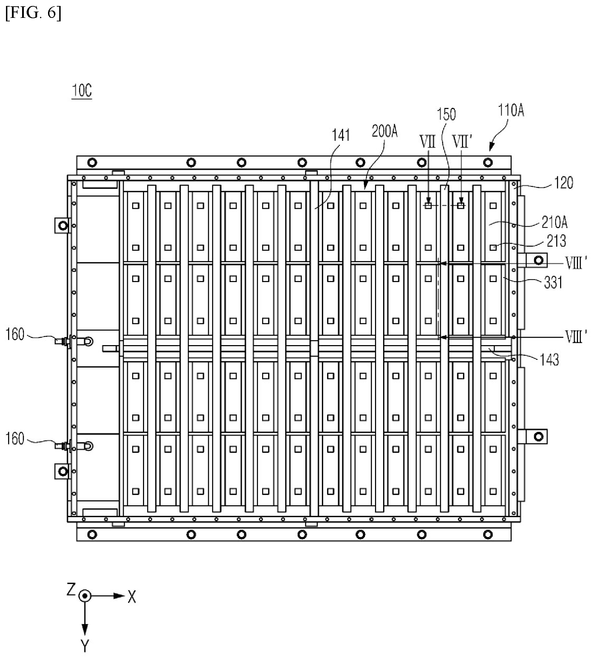

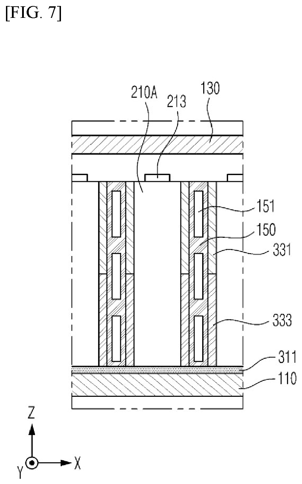

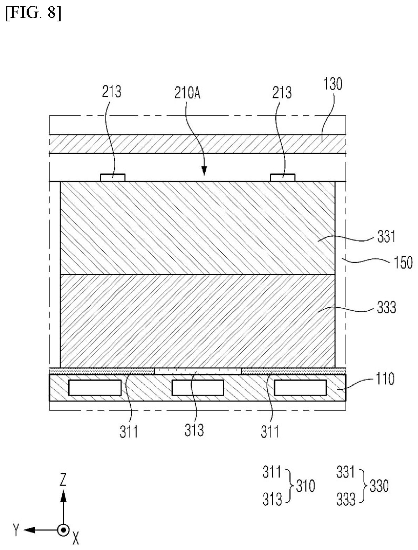

FIG. 6 is a plan view showing a portion of the battery device 10C according to exemplary embodiments. FIG. 7 is a cross-sectional view of the battery device 10C along line VII-VII' of FIG. 6. FIG. 8 is a cross-sectional view of the battery device 10C along line VIII-VIII' of FIG. 6. Hereinafter, the battery device 10C shown in FIGS. 6 to 8 will be described, focusing on the differences from the battery device 10 described with reference to FIGS. 1 to 3.

Referring to FIGS. 6 through 8, in the battery device 10C, the cell assembly 200A may include a plurality of battery cells 210A arranged on the base frame 110 in a first horizontal direction (e.g., X-axis direction) and a second horizontal direction (e.g., Y-axis direction). The plurality of battery cells 210A may each correspond to a prismatic battery cell. The plurality of battery cells 210A may be attached to the base frame 110 by a base thermally conductive adhesive layer 310. For example, each battery cell 210A may be attached to the base frame 110 by a first base thermally conductive adhesive layer 311, and a second base thermally conductive adhesive layer 313.

The housing 100 of the battery device 10C may include a plurality of side cooling frames 150 disposed on the base frame 110. Each side cooling frame 150 may be disposed between two adjacent battery cells 210A among the plurality of battery cells 210A and may be attached to the sides of the two battery cells 210A. In exemplary embodiments, the plurality of side cooling frames 150 may each be spaced apart from one another in the second horizontal direction (e.g., the Y-axis direction), and the plurality of side cooling frames 150 may each extend in the second horizontal direction (e.g., the Y-axis direction).

The side cooling frame 150 may include a material with high thermal conductivity, such as a metal. For example, the side cooling frame 150 may include aluminum, copper, gold, silver, tungsten, or a combination thereof.

The side cooling frame 150 may include a side cooling channel 151 configured to allow a cooling fluid to flow. In exemplary embodiments, the side cooling channel 151 may extend within the side cooling frame 150 in a second horizontal direction (e.g., the Y-axis direction) and may be configured to guide the cooling fluid in the second horizontal direction (e.g., the Y-axis direction). While cooling fluid supplied from outside flows along the side cooling channel 151, cooling of the plurality of battery cells 210A may be performed. The cooling fluid may include cooling water and/or a refrigerant.

The battery device 10C may include a side thermally conductive adhesive layer 330 provided between the side cooling frame 150 and the battery cell 210A, configured to attach the side cooling frame 150 to the battery cell 210A. The battery cell 210A may be thermally and physically coupled to the side cooling frame 150 via the side thermally conductive adhesive layer 330. Heat generated from the battery cell 210A may be transferred to the side cooling frame 150 via the side thermally conductive adhesive layer 330. The side thermally conductive adhesive layer 330 may include a thermal resin and/or a thermal interface material.

The side thermally conductive adhesive layer 330 may include a plurality of thermally conductive adhesive layers having different material compositions, different thermal conductivities, and/or different adhesive strengths. The plurality of thermally conductive adhesive layers of the side thermally conductive adhesive layer 330 may be attached to different regions of the battery cell 210A. The plurality of thermally conductive adhesive layers of the side thermally conductive adhesive layer 330 may include a heat dissipation filler, wherein the content of the heat dissipation filler may differ among the plurality of thermally conductive adhesive layers of the side thermally conductive adhesive layer 330. The heat dissipation filler may include, for example, alumina, boron nitride, aluminum nitride, zinc oxide, magnesium oxide, or combinations thereof.

In exemplary embodiments, the side thermally conductive adhesive layer 330 may include a first side thermally conductive adhesive layer 331 in contact with a first region of the battery cell 210A and a second side thermally conductive adhesive layer 333 in contact with a second region of the battery cell 210A. The first side thermally conductive adhesive layer 331 may attach a first region of the battery cell 210A to the side cooling frame 150, and the second side thermally conductive adhesive layer 333 may attach a second region of the battery cell 210A to the side cooling frame 150.

The first side thermally conductive adhesive layer 331 may have a first thermal conductivity and a first adhesive strength, and the second side thermally conductive adhesive layer 333 may have a second thermal conductivity and a second adhesive strength. The first thermal conductivity of the first side thermally conductive adhesive layer 331 may be greater than the second thermal conductivity of the second side thermally conductive adhesive layer 333, and the first adhesive strength of the first side thermally conductive adhesive layer 331 may be less than the second adhesive strength of the second side thermally conductive adhesive layer 333. The first side thermally conductive adhesive layer 331, having relatively high thermal conductivity, is attached to areas within the battery cell 210A where relatively large amounts of heat are generated, thereby enhancing cooling of the battery cell 210A.

In exemplary embodiments, the first thermal conductivity of the first side thermally conductive adhesive layer 331 is between approximately 3 W/(m·K) and 10 W/(m·K), approximately 4 W/(m·K) to 9 W/(m·K), approximately 5 W/(m·K) to 8 W/(m·K), or approximately 6 W/(m·K) to 7 W/(m·K). In exemplary embodiments, the second thermal conductivity of the second side thermally conductive adhesive layer 333 may be between about 20% and about 80% of the first thermal conductivity of the first side thermally conductive adhesive layer 331, between about 30% and about 70%, or between about 40% and about 60%.

In exemplary embodiments, the second adhesive strength of the second side thermally conductive adhesive layer 333 may be between about 1 MPa and about 5 MPa, between about 1.5 MPa and about 4.5 MPa, between about 2 MPa and about 4 MPa, or between about 2.5 MPa and about 3.5 MPa. In exemplary embodiments, the first adhesive strength of the first side thermally conductive adhesive layer 331 may be between about 10% and about 90% of the second adhesive strength of the second side thermally conductive adhesive layer 333, between about 20% and about 80%, between about 30% and about 70%, or between about 40% and about 60%.

In exemplary embodiments, a portion of the electrode lead 213 of the battery cell 210A may be located on the upper surface of the battery cell 210A. The battery cell 210A may include an upper part relatively adjacent to the electrode lead 213 and a lower part relatively distant from the electrode lead 213. The first side thermally conductive adhesive layer 331 may contact the upper part of the battery cell 210A, and the second side thermally conductive adhesive layer 333 may contact the lower part of the battery cell 210A. The upper part of the battery cell 210A relatively adjacent to the electrode lead 213 is a portion where relatively more heat is generated during operation of the battery cell 210A, and the lower part of the battery cell 210A relatively distant from the electrode lead 213 is a portion where relatively less heat is generated during operation of the battery cell 210A. A first side thermally conductive adhesive layer 331 with relatively high thermal conductivity is attached to the upper part of the battery cell 210A, enabling enhanced cooling for a plurality of battery cells 210A. A second side thermally conductive adhesive layer 333 with relatively low thermal conductivity can be attached to the lower part of the battery cell 210A. By attaching the first side thermally conductive adhesive layer 331 to the upper part of the battery cell 210A and the second side thermally conductive adhesive layer 333 to the lower part of the battery cell 210A, temperature variations within the battery cell 210A can be reduced.

### (Fifth embodiment)

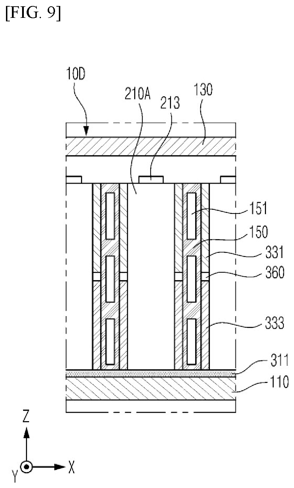

FIG. 9 is a cross-sectional view showing a portion of a battery device 10D according to exemplary embodiments. Hereinafter, the battery device 10D shown in FIG. 9 is described, focusing on the differences from the battery device 10C described with reference to FIGS. 6 to 8.

Referring to FIG. 9, the battery device 10D may further include a separation pad 360 disposed between the first side thermally conductive adhesive layer 331 and the second side thermally conductive adhesive layer 333. The separation pad 360 may be attached to the side cooling frame 150. For example, the separation pad 360 may extend in a second horizontal direction (e.g., the Y-axis direction), and the first side thermally conductive adhesive layer 331 and the second side thermally conductive adhesive layer 333 may be spaced apart in a vertical direction (e.g., the Z-axis direction) with the separation pad 360 interposed between them. The separation pad 360 is disposed between the first side thermally conductive adhesive layer 331 and the second side thermally conductive adhesive layer 333, thereby preventing or suppressing mixing between the first side thermally conductive adhesive layer 331 and the second side thermally conductive adhesive layer 333.

The separation pad 360 may include a material having a predetermined elasticity. When the cell assembly 200 is seated on the separation pad 360, the separation pad 360 is compressed, and the thickness of the separation pad 360 may decrease from its initial thickness. In exemplary embodiments, the separation pad 360 may include a polyurethane resin, a silicone resin, or a combination thereof.

### (Sixth embodiment)

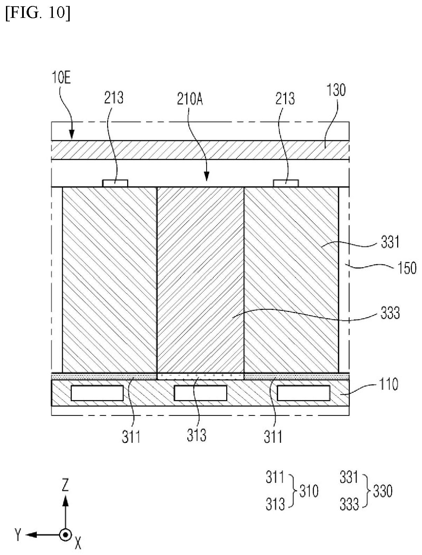

FIG. 10 is a cross-sectional view showing a portion of a battery device 10E according to exemplary embodiments. Hereinafter, the battery device 10E shown in FIG. 10 is described with a focus on the differences from the battery device 10C described with reference to FIGS. 6 to 8.

Referring to FIG. 10, in the battery device 10E, the battery cell 210 may include a first peripheral part, a central part, and a second peripheral part arranged in a second horizontal direction (e.g., the Y-axis direction). A first side thermally conductive adhesive layer 331 may be attached to the first peripheral part and the second peripheral part of the battery cell 210, and a second side thermally conductive adhesive layer 333 may be attached to the central part of the battery cell 210. The battery cell 210 may include a pair of electrode leads 211 provided on the upper surface of the battery cell 210, wherein one of the pair of electrode leads 211 is located at the first peripheral part of the battery cell 210, and the remaining one of the pair of electrode leads 211 may be located at the second peripheral part of the battery cell 210. A first side thermally conductive adhesive layer 331 having relatively high thermal conductivity may be attached to the first peripheral part and the second peripheral part of the battery cell 210, thereby enhancing cooling of the battery cell 210. A second side thermally conductive adhesive layer 333 having relatively low thermal conductivity may be attached to the central part of the battery cell 210A. By attaching the first side thermally conductive adhesive layer 331 to the first peripheral part and second peripheral part of the battery cell 210A and attaching the second side thermally conductive adhesive layer 333 to the central part of the battery cell 210A, temperature variations within the battery cell 210A can be reduced.

### (Seventh embodiment)

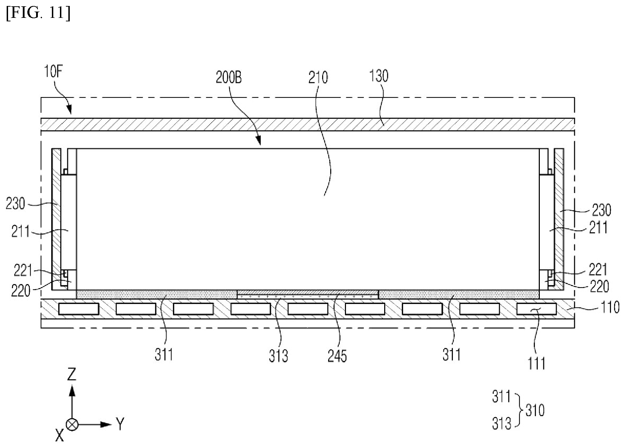

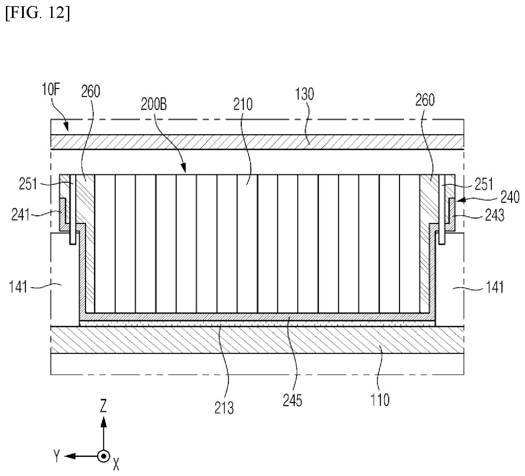

FIG. 11 is a cross-sectional view showing a portion of the battery device 10F according to exemplary embodiments. FIG. 12 is a cross-sectional view showing a portion of the battery device 10F according to exemplary embodiments. Hereinafter, the battery device 10F shown in FIGS. 11 and 12 will be described, focusing on the differences from the battery device 10 described with reference to FIGS. 1 to 3.

Referring to FIGS. 11 and 12, in the battery device 10F, the cell assembly 200B may include a pair of side beams 260 and a lifting band 240.

The pair of side beams 260 may be spaced apart in a second horizontal direction (e.g., the Y-axis direction) with a plurality of battery cells 210 therebetween. One of the pair of side beams 260 may be attached to the outermost battery cell 210 among the plurality of battery cells 210, and the other of the pair of side beams 260 may be attached to another outermost battery cell 210 among the plurality of battery cells 210. A pair of side beams 260 may each be fastened to a corresponding first separation frame 141 among the first separation frames 141 of the housing 100 via fastening members 251, such as bolts.

A lifting band 240 may be coupled to the pair of side beams 260 and may support the plurality of battery cells 210. The lifting band 240 may include a first flange part 241 coupled to one of the pair of side beams 260, a second flange part 243 coupled to the remaining one of the pair of side beams 260, and a support plate 245 supporting the plurality of battery cells 210. The first flange part 241 may be connected to one end of the support plate 245, and the second flange part 243 may be connected to the other end of the support plate 245. The first flange part 241 may be coupled to one of a pair of side beams 260 by a fastening member 251, and the second flange part 243 may be coupled to the remaining one of the pair of side beams 260 by another fastening member 251. The support plate 245 of the lifting band 240 contacts the bottom surfaces of the plurality of battery cells 210 and can support the plurality of battery cells 210. The lifting band 240 may have a single structure in which the first flange part 241, the second flange part 243, and the support plate 245 are integrally formed together. The lifting band 240 may include metal. When mounting the cell assembly 200B onto the housing 100 or separating it from the housing 100, the lifting jig is fastened to the cell assembly 200B, and then the lifting jig is lifted to move the cell assembly 200B. The lifting band 240 supports the plurality of battery cells 210, thereby preventing or suppressing sagging of the battery cells 210 due to their weight while the cell assembly 200B is being transferred by the lifting jig.

In exemplary embodiments, the support plate 245 of the lifting band 240 may be interposed between the second base thermally conductive adhesive layer 313 and the base frame 110. The central part of each battery cell 210 is attached to the base frame 110 by the second base thermally conductive adhesive layer 313 having relatively high adhesive strength, while the first peripheral part and second peripheral part of each battery cell 210 are attached to the base frame 110 by the first base thermally conductive adhesive layer 311 with relatively low adhesive strength. Since the lifting band 240 is disposed between the plurality of battery cells 210 and the base frame 110, the plurality of battery cells 210 do not come into direct contact with the second base thermally conductive adhesive layer 313. Separation between the cell assembly 200B and the base frame 110 is achieved by separating the first base thermally conductive adhesive layer 311 from the plurality of battery cells 210 and separating the second base thermally conductive adhesive layer 313 from the lifting band 240. Since the plurality of battery cells 210 do not directly contact the second base thermally conductive adhesive layer 313, damage to the battery cells 210 can be prevented during the process of separating the cell assembly 200B from the base frame 110. Furthermore, since the first base thermally conductive adhesive layer 311 directly attached to the plurality of battery cells 210 has relatively low adhesive strength, there is little risk of damaging the plurality of battery cells 210 during the process of separating the cell assembly 200B from the base frame 110.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

### [Description of Reference Numerals]

| | | | |
|---|---|---|---|
| 10: | BATTERY DEVICE | 100: | HOUSING |
| 110: | BASE FRAME | 120: | SIDE FRAME |
| 130: | TOP FRAME | 141: | FIRST SEPARATION FRAME |
| 143: | SECOND SEPARATION FRAME | 200: | CELL ASSEMBLY |
| 210: | BATTERY CELL | 220: | BUSBAR FRAME |
| 230: | END FRAME | | |
| 310: | BASE THERMALLY CONDUCTIVE ADHESIVE LAYER | | |
| 311: | FIRST BASE THERMALLY CONDUCTIVE ADHESIVE LAYER | | |
| 313: | SECOND BASE THERMALLY CONDUCTIVE ADHESIVE LAYER | | |

## Claims

1. A battery device comprising:
a housing;
a cell assembly provided within the housing and comprising a plurality of battery cells;
a first thermally conductive adhesive layer configured to attach a first region of the cell assembly to the housing; and
a second thermally conductive adhesive layer configured to attach a second region of the cell assembly to the housing, wherein
the thermal conductivity of the first thermally conductive adhesive layer is greater than the thermal conductivity of the second thermally conductive adhesive layer, wherein
the adhesive strength of the first thermally conductive adhesive layer is less than the adhesive strength of the second thermally conductive adhesive layer.

2. The battery device of claim 1, wherein
the plurality of battery cells each comprises a first portion relatively adjacent to an electrode lead and a second portion relatively distant from the electrode lead, wherein
the first thermally conductive adhesive layer contacts the first portion of each of the plurality of battery cells, wherein
the second thermally conductive adhesive layer contacts the second portion of each of the plurality of battery cells.

3. The battery device of claim 2, wherein
the cell assembly further comprises a busbar frame supporting the electrode leads of the plurality of battery cells.

4. The battery device of claim 2, further comprising:
a third thermally conductive adhesive layer configured to attach a third region of the cell assembly, located between the first region and the second region of the cell assembly, to the housing, wherein
the thermal conductivity of the third thermally conductive adhesive layer is between the thermal conductivity of the first thermally conductive adhesive layer and the thermal conductivity of the second thermally conductive adhesive layer, wherein
the adhesive strength of the third thermally conductive adhesive layer is between the adhesive strength of the first thermally conductive adhesive layer and the adhesive strength of the second thermally conductive adhesive layer.

5. The battery device of claim 1, wherein
the plurality of battery cells each comprises a first peripheral part, a second peripheral part, and a central part between the first peripheral part and the second peripheral part, wherein
the first thermally conductive adhesive layer contacts the first peripheral part and the second peripheral part of each of the plurality of battery cells, wherein
the second thermally conductive adhesive layer is in contact with the central part of each of the plurality of battery cells.

6. The battery device of claim 1, further comprising:
a separation pad disposed between the first thermally conductive adhesive layer and the second thermally conductive adhesive layer.

7. The battery device of claim 6, wherein
the separation pad is in contact with the plurality of battery cells.

8. The battery device of claim 1, wherein
the housing comprises: a base frame supporting the cell assembly and comprising a cooling channel configured to allow a cooling fluid to flow; and
a side frame disposed on the base frame, wherein
the first thermally conductive adhesive layer and the second thermally conductive adhesive layer are provided between the cell assembly and the base frame.

9. The battery device of claim 8, further comprising:
a separation pad attached to the base frame and in contact with the plurality of battery cells, wherein
the first thermally conductive adhesive layer is spaced apart from the second thermally conductive adhesive layer with the separation pad in between.

10. The battery device of claim 1, wherein
the housing comprises:
a base frame supporting the cell assembly; and
a side cooling frame disposed between two adjacent battery cells among the plurality of battery cells, wherein
the first thermally conductive adhesive layer and the second thermally conductive adhesive layer are in contact with at least one of the plurality of battery cells and the side cooling frame.

11. The battery device of claim 10, wherein
the side cooling frame comprises a cooling channel configured to allow a cooling fluid to flow.

12. The battery device of claim 10, further comprising:
a separation pad attached to the side cooling frame, wherein
the first thermally conductive adhesive layer is spaced apart from the second thermally conductive adhesive layer with the separation pad in between.

13. The battery device of claim 1, wherein
the housing further comprises:
a base frame supporting the cell assembly and attached to the first thermally conductive adhesive layer and the second thermally conductive adhesive layer;
a side cooling frame disposed between two adjacent battery cells among the plurality of battery cells;
a first side thermally conductive adhesive layer configured to attach a first region of a corresponding battery cell among the plurality of battery cells to the cooling frame; and
a second side thermally conductive adhesive layer configured to attach a second region of a corresponding battery cell among the plurality of battery cells to the cooling frame, wherein
the thermal conductivity of the first side thermally conductive adhesive layer is greater than the thermal conductivity of the second side thermally conductive adhesive layer.

14. The battery device of claim 13, wherein
the adhesive strength of the first side thermally conductive adhesive layer is smaller than the adhesive strength of the second side thermally conductive adhesive layer.

15. The battery device of claim 1, wherein
the cell assembly further comprises:
a pair of side beams spaced apart with the plurality of battery cells therebetween; and
a lifting band fastened to the pair of side beams and extending along the bottom surfaces of the plurality of battery cells, wherein
the lifting band is disposed between the second thermally conductive adhesive layer and the plurality of battery cells.
